(19) Europäisches Patentamt
European Patent Office
Office européen des brevets

(11)  EP 2 444 940 B1

(12)  **EUROPEAN PATENT SPECIFICATION**

(45)  Date of publication and mention
of the grant of the patent:
**25.03.2020  Bulletin 2020/13**

(51)  Int Cl.:
**G06T 15/50** *(2011.01)*          **G06T 15/06** *(2011.01)*

(21)  Application number: **11185404.8**

(22)  Date of filing: **17.10.2011**

(54)  **Method for estimation of occlusion in a virtual environment**

Verfahren zur Schätzung von Okklusion in einer virtuellen Umgebung

Procédé pour l'estimation de l'occlusion d'un environnement virtuel

(84)  Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30)  Priority:  **21.10.2010  FR 1058604**

(43)  Date of publication of application:
**25.04.2012  Bulletin 2012/17**

(73)  Proprietor: **Thomson Licensing
92130 Issy-les-Moulineaux (FR)**

(72)  Inventors:
• **Sourimant, Gael
35576 CESSON SEVIGNE CEDEX (FR)**
• **Gautron, Pascal
35576 CESSON SEVIGNE (FR)**
• **Marvie, Jean-Eudes
35576 CESSON SEVIGNE CEDEX (FR)**

(74)  Representative: **Vidon Brevets & Stratégie
16B, rue de Jouanet
BP 90333
35703 Rennes Cedex 7 (FR)**

(56)  References cited:
• ANONYMOUS: "Blender Dokumentation: Ambient Occlusion", WIKIBOOKS: die freie Bibliothek, 5 January 2009 (2009-01-05), pages 1-5, XP002654574, Retrieved from the Internet: URL:http://de.wikibooks.org/wiki/Blender_D okumentation:_Ambient_Occlusion [retrieved on 2011-07-25]
• Shanmugam P; Arikan O: "Hardware accelerated ambient occlusion techniques on GPUs", Proceedings of the 2007 symposium on Interactive 3D graphics and games, 30 April 2007 (2007-04-30), 7 March 1973 (1973-03-07), pages 73-80, XP002654580, Retrieved from the Internet: URL:http://tinyurl.com/ambientocclusion [retrieved on 2011-07-27]
• SZIRMAY-KALOS L ET AL: "Volumetric Ambient Occlusion for Real-Time Rendering and Games", IEEE COMPUTER GRAPHICS AND APPLICATIONS, IEEE SERVICE CENTER, NEW YORK, NY, US, vol. 30, no. 1, 1 January 2010 (2010-01-01), pages 70-79, XP011286870, ISSN: 0272-1716, DOI: 10.1109/MCG.2010.19
• ANONYMOUS: "Ambient Occlusion", Wikipedia, the free encyclopedia, 17 August 2010 (2010-08-17), pages 1-3, XP002654581, Retrieved from the Internet: URL:http://preview.tinyurl.com/wiki-ambien tocclusion [retrieved on 2011-07-26]
• Sourimant, G.; et al: "Poisson Disk Ray-Marched Ambient Occlusion", , 18 February 2011 (2011-02-18), XP002668708, Retrieved from the Internet: URL:http://gael.sourimant.free.fr/publis/2 011/i3d11.pdf [retrieved on 2012-01-30]

**Description**

1. Domain of the invention.

The invention relates to the domain of synthesis image composition and more specifically to the domain of the estimation of ambient occlusion in a virtual environment. The invention is also understood in the context of special effects for a live composition.

2. Prior art

According to the prior art, different methods exist to simulate ambient occlusion in a virtual environment. According to one of these methods, in order to calculate the occlusion in a point of the virtual environment (also called the scene), a sufficient number of rays are launched from this point across the virtual environment in order to determine the intersections between these rays and the geometry neighbouring this point. The relationship between the number of rays intersected and the number of rays launched enables the occlusion at the point being considered to be determined. This method, in order to obtain good quality results, requires a lot of rays to be launched. The resources required to perform the calculations depending directly on the number of rays launched, the requirements in calculations being too great to be carried out live if the desired display quality is high. To carry out the occlusion calculations live, it may be necessary to reduce the number of rays launched, to the detriment of the quality of the display of the virtual environment.

With the emergence of interactive simulation games and applications, notably in three dimensions (3D), the need is being felt for live simulation methods offering a high quality and realistic, rapid global occlusion estimation.

Document entitled "Blender Dokumentation: Ambient Occlusion", retrieved from:URL:http://de.wikibooks.orgs/wiki/Blender Dokumentation: Ambient Occlusio n, and dated January 5, 2009, discloses the use of ambient occlusion for simulating global illumination of a virtual scene, rays of lights being casted from a visible point of a surface of the scene, the rays of lights forming an half-sphere, the occlusion being estimated from the ration between rays of light having an intersection with other surfaces and rays of light having no intersection with other surfaces.

Document entitled "Hardware accelerated ambient occlusion techniques on GPUs", published by P. Shanmugam and O. Arikan in Proceedings of the 2007 symposium on interactive 3D graphics and games on April 30, 2007, discloses a multi-pass algorithm for estimating ambient occlusion on real-time graphics hardware.

3. Summary of the invention

The purpose of the invention is to overcome at least one of these disadvantages of the prior art.
More specifically, the purpose of the invention is notably to optimize the calculation time and/or the calculation power required to estimate live the ambient occlusion in a virtual environment to produce a realistic display.

The invention relates to a method for estimation of the occlusion at a point P of a virtual environment as defined by claim 1.

The invention also relates to a device adapted for the estimation of the occlusion at a point P of a virtual environment as defined by claim 7.

Particular embodiments of the invention are defined by the dependent claims.

4. List of figures

The invention will be better understood, and other specific features and advantages will emerge upon reading the following description, the description making reference to the annexed drawings wherein:

- figure 1A diagrammatically shows a virtual environment as seen from a viewpoint, according to a particular embodiment of the invention,
- figure 1B shows a depth map, associated with the virtual environment and with the view point, representative of a surface grouping the visible points of figure 1A from the viewpoint, according to a particular embodiment of the invention,
- figures 2 and 3 diagrammatically show half-spheres formed of directions for which are estimated the intersections with the surface of visible points of the virtual environment of figure 1A, according to two particular embodiments of the invention,
- figures 4 and 5 diagrammatically show a method for estimation of the intersection between a direction of figures 2 and 3 and the surface of visible points of the virtual environment of figure 1A, according to a particular embodiment of the invention,
- figure 6 shows a device implementing a method for estimation of the occlusion at a point in the virtual environment of figure 1A, according to a particular implementation of the invention,

- figure 7 shows a method for estimation of the occlusion at a point in the virtual environment of figure 1A, according to a particular implementation of the invention,

5. Detailed description of embodiments of the invention.

The invention will be described in reference to a particular embodiment of a method for estimation of occlusion at a point P of a virtual environment. The point P advantageously is part of a surface formed from all or some of the virtual environment points that are visible from a viewpoint. In order to determine the occlusion at the point P, a plurality of rays having as an origin the point P is launched across the virtual environment and the intersections between each of these rays and the surface of visible points are determined by discretizing launched rays. The occlusion at the point P corresponds for example to the relationship between the number of rays having an intersection with the surface of visible points to the total number of rays. The discretization of each of the rays launched enables the intersection point with the surface to be determined with precision when it exists. As the occlusion at a point, or otherwise known as the shading at a point, depends on the neighbouring geometry of this point, determining with precision the intersections with the surface of visible points surrounding the point P considered enables the occlusion at the point P to be estimated more precisely without however requiring the launch of a great number of rays. Thus, the estimation of the occlusion at the point P according to the specific embodiment of the invention described is rapid and offers a good level of quality, specifically enabling real time or live application.

By estimating the occlusion at each point of the surface of visible points, it is possible to determine the ambient occlusion of the virtual environment and thus to determine a shading at each visible point of the virtual environment, without needing to know the lighting applied to the virtual environment.

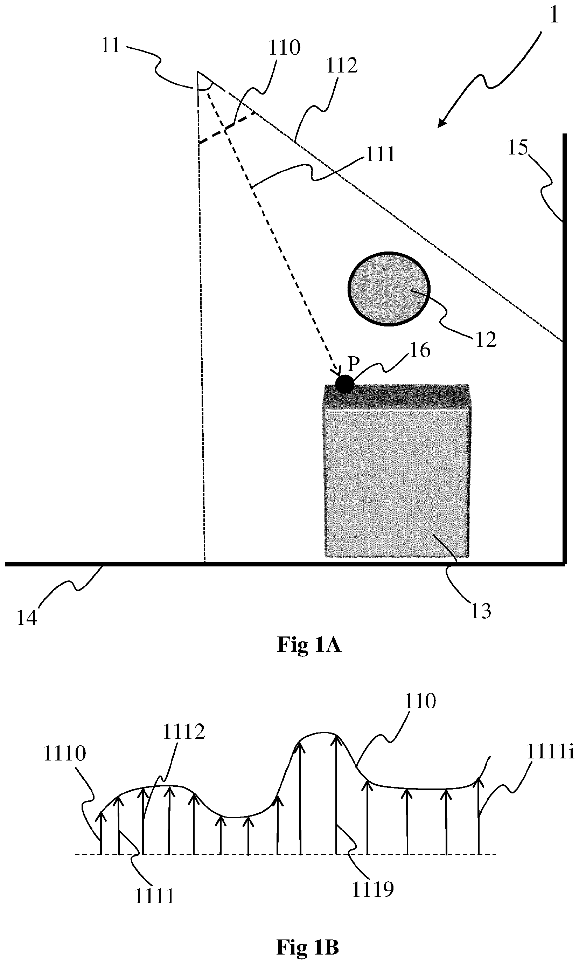

Figure 1 shows a virtual environment or a virtual scene 1 as seen from a viewpoint 11, for example a spectator of the virtual environment 1. The virtual environment is advantageously lit by a light environment ensuring a constant and homogenous lighting at every point of the virtual environment. The virtual environment 1 comprises one or several virtual objects 12, 13, 14 and 15, modelled according to any method known to those skilled in the art, for example by polygonal modelling, in which the model is assimilated with a set of polygons each defined by the list of summits and edges that compose it, by NURBS (Non uniform rational basic spline) type curve modelling in which the model is defined by a set of curves created via control vertices, by modelling by subdivision of surfaces. By virtual object is understood any virtual representation (obtained by modelling) of an object (real or fictitious) composing a real environment (for example the ground, a house or a house front, a car, a tree, that is to say any element composing an environment such as a part of a house, a street, a town, the countryside, etc.) or an imaginary element. Each object 12, 13, 14 and 15 of the virtual environment is characterized by a surface covering it, the surface of each object having reflectance properties (corresponding to the proportion of incident light reflected by the surface in one or several directions) that are specific to it. Advantageously, the reflectance of the surface of an object varies according to the zone of the object reflecting the light (a zone of the surface comprising one or several points of the surface) that is to say that the reflectance of the surface of an object is not constant. According to a variant, the reflectance of the surface of an object is constant at any point of the surface of the object. According to the example of figure 1, the spectator 11 looks at the point P 16 of the virtual environment 1 according to an observation direction 111, the point P 16 corresponding to the intersection between the observation direction 111 and the first object of the virtual environment 1 encountered by this observation direction having as origin the viewpoint 11, namely the object 13. The part of the virtual environment 1 seen from the viewpoint 11 is shown by a viewing cone 112, the viewing cone being composed of a great number of viewing directions including the viewing direction 111. The set of points of objects 12 to 15 visible from the viewpoint 11 advantageously forms a surface S of visible points. According to a variant, the surface S only comprises a sub-set of the set of visible points, for example the visible points of objects 12 and 13 if there is only interest in these objects 12 and 13. Determining the occlusion at the point P 16 means determining the distance separating the point P from each of the points of the surface S in the area neighbouring the point P 16, or in other words, determining the intersections between the half-lines having as origin the point P and the surface S. By neighbouring area of the point P on the surface S is understood for example the set of points belonging to the surface S located at a distance from the point P less than a threshold value, for example at a distance less than 25 cm, 50 cm or 1 m. Advantageously, the determination of intersections between the half-lines with origin at the point P 16 and the surface S is carried out in a world space, that is to say in a space of the virtual environment from geometric coordinates of points considered. The set of half-lines having as origin the point P forms for example a sphere with a centre P, a half-sphere for which the base is centred on P or a quarter-sphere.

According to a variant, the determination of intersections between the half-lines with origin at the point P 16 and the surface S is carried out in a space of a depth map 110. According to this variant, the virtual environment 1 is displayed as seen from the viewpoint 11. Information representative of the virtual environment 1 as seen from the viewpoint 11 is stored in a depth map 110. The depth map advantageously comprises for each point of the virtual environment 1 visible from the viewpoint an item of information representative of the distance separating the viewpoint 11 of the visible point considered. Figure 1B shows such a depth map 110 according to a particular embodiment of the invention. The information representative of the distance is represented by a vector 1110 to 111i of which the norm is equal to the distance between the view point 11 and the visible point considered. The depth map is thus composed of a plurality of points associated with the visible points of the virtual environment 1 projected onto a surface formed for example by a cone 112 representative of the field of vision of the viewpoint 11 and perpendicular to the main direction of observation of the viewpoint 11. An item of information representative of the depth, that is to say of the distance viewpoint / visible point, is associated with each corresponding point of the depth map. By connecting each point of the depth map formed by the end of vectors representative of the depth, a surface S' is obtained representative of the set of visible points of the environment as seen from the viewpoint 11. This surface S' is, like the surface S, representative of the set of all or some of the points of the environment visible from the viewpoint, comprising the point P 43. According to this variant, the depth information is advantageously recorded and stored in a data structure composed of tables recorded in a memory associated with the GPUs. These recordings are called depth recordings. These recordings enable the set of points of the virtual environment 1 visible from the viewpoint 11 to be referenced, for which there can be an occlusion estimation method in order to for example determine the ambient occlusion of the virtual environment 1, or a part of the virtual environment, for example one of several objects 12 to 15 composing the virtual environment 1.

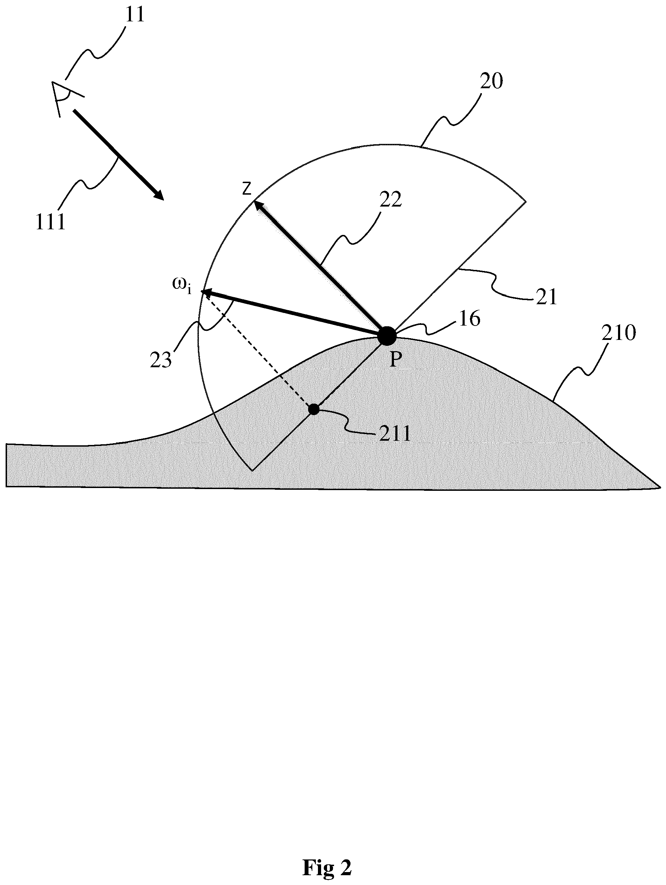

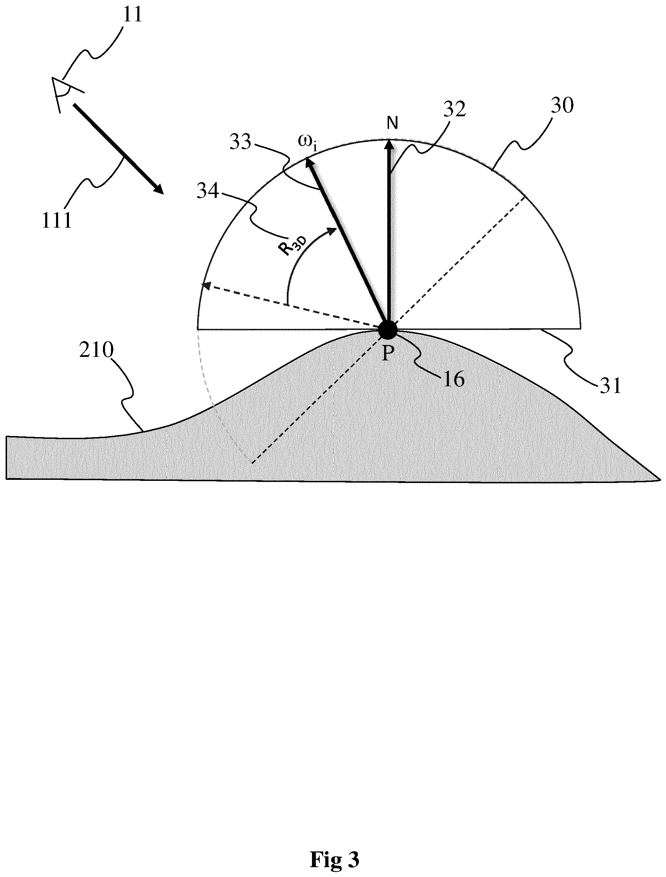

Figures 2 and 3 show half-spheres 20 and 30 each formed of half-lines having as origin the point P 16 and for which the intersections with the surface S (or S' if placed in the space of the depth map) are determined. As shown with respect to figure 2, the half-sphere 20 is composed of a plurality of vectors 22, 23, each vector representing the direction associated with a half-line having as origin the point P. The half-sphere 20 has a base 21 that is essentially orthogonal in the observation direction 111 of the virtual environment. In order to determine the vectors 22, 23 that form the half-sphere 20, the base 21 is for example sampled in n samples (each sample corresponding for example to a point 211 or to a surface element associated with the point), each sample of the base 21 being then projected onto the half-sphere 20 according to an orthogonal axis Z at the base 21 to form a vector 23 having as ends the point P on one hand and the projection of the sample considered 211 of the base 21 on the other hand. The number n of samples is advantageously configured by a user. To accelerate the calculations, the number n of samples is advantageously low. To avoid display errors related to under-sampling, the n samples used to represent a half-sphere associated with a point P vary from one point P to another in a given zone of the surface S, a rotation matrix being applied to n base samples to obtain sets of n different samples for each point P of the zone of the surface S considered. To do this, the angle $\theta$ of the rotation matrix varies randomly or in a determined manner from one point P to another enabling for each point P to create a set of n samples from the n base samples. The rotation matrix with two dimensions $R_{2D}$ applied to n base samples is equal to for example:

$$R_{2D} = \begin{bmatrix} cos\theta & -sin\theta \\ sin\theta & cos\theta \end{bmatrix} \qquad\qquad (1)$$

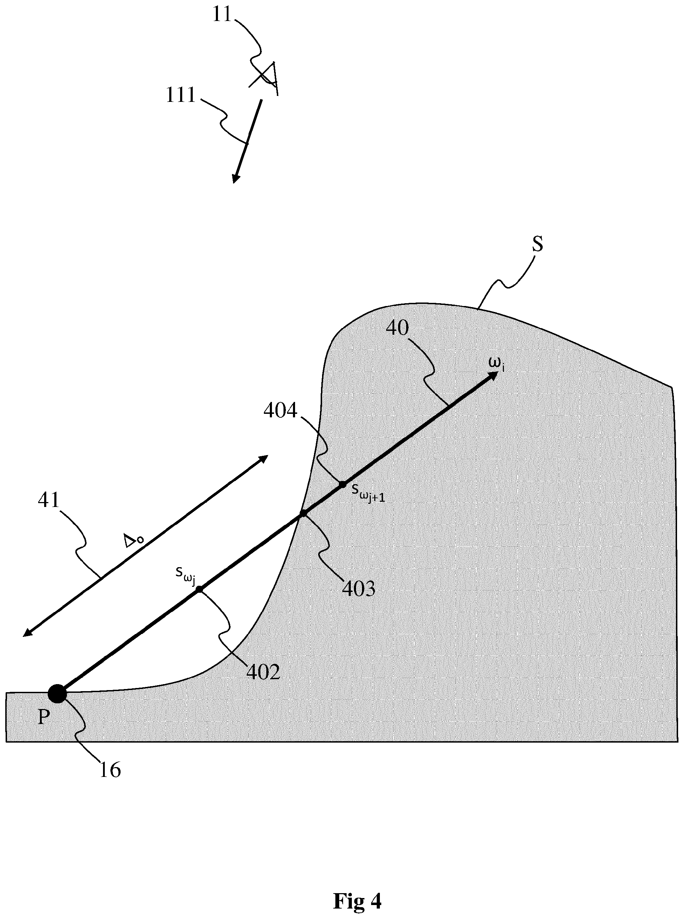

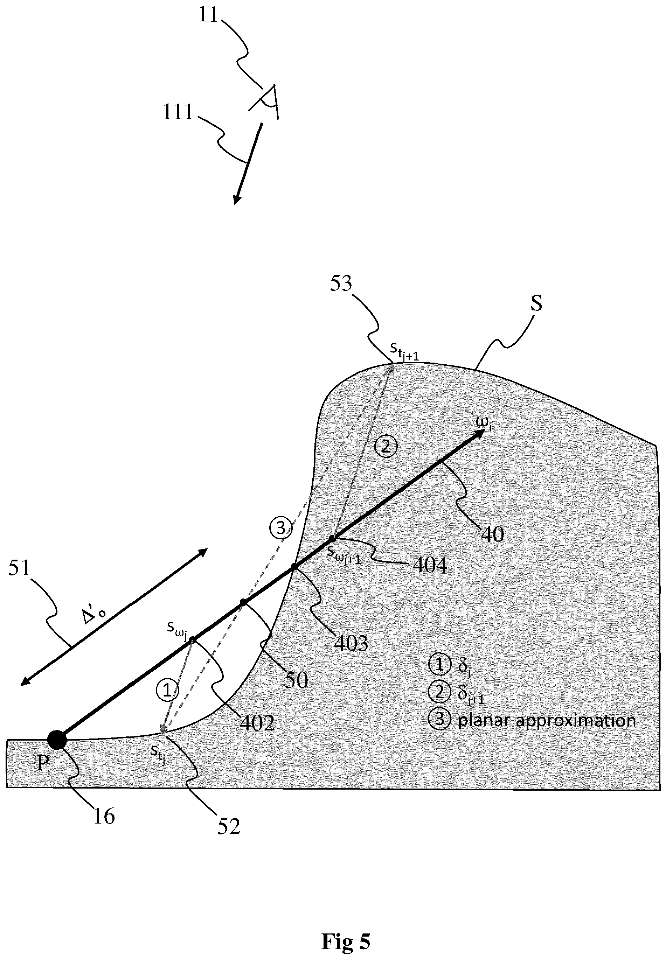

All of the vectors 22, 23 have a common first end, namely the point P 16, a surface element being associated with the second end of each vector 22, 23, the sum of surface elements associated with the vectors forming the surface of the half-sphere 20. To obtain the occlusion at the point P 16, the half-lines having as origin the point P having an intersection with the surface S (as explained more precisely with respect to figures 4 and 5) are first determined and the surface elements associated with the vectors corresponding to these half-lines are then added-up. Then the ratio between on one hand the sum of surface elements corresponding to the half-lines having an intersection with the surface S 110 and on the other hand the total surface of the half-sphere 20 is carried out. The surface ratio thus obtained is representative of the occlusion at the point P 16, this occlusion being representative of the shading on the surface S at the point P. The half-sphere 20 formed from the plurality of half-lines having as origin the point P 16 is advantageously mainly over the surface element 210 of the surface S associated with the point P 16. It is understood by the expression "is mainly over the surface element associated with the point P" the fact that the majority of vectors forming the half-sphere do not have an intersection with the surface element 210 or by the fact that the base 21 of the half-sphere forms an angle with the tangent to the surface element at the point P les than a given threshold value, for example less than 45 degrees.

Figure 3 also shows a half-sphere for which the base 31 is centred on the point P 16. The half-sphere 30 is composed of a plurality of vectors 32, 33, each vector representing the direction associated with a half-line having as origin the point P for which the intersection with the surface S must be determined. As shown in figure 2, the base of the half-sphere 30 is tangent to the surface element 210 of the surface S associated with the point P 16, the vector N representing the normal to the tangent at the surface element 210. The half-sphere 30 for which the base 31 is tangent to the surface element 210 associated with the point P is obtained for example from the half-sphere 20 for which the base 21 is orthogonal to the observation direction 111 turning the axis Z in such a way that it becomes orthogonal to the tangent at the surface element 210. The rotation used in this case corresponds for example to a rotation leading to a sample direction $\omega_i$ from the space corresponding to the environment 1 as seen from the viewpoint 11 according to the observation direction 111 in the space normal to the tangent at the surface element 210, the rotation being expressed with coordinates of the space corresponding to the environment as seen from the viewpoint 11, this rotation being called $R_{3D}$. Analytically $R_{3D}$ is determined using an angle/axis representation $(r,\theta)$, r being defined as the vector orthogonal to N 32 and Z 22, and $\theta$ being defined as being the angle between:

$$\begin{cases} r = \|[0 \quad 0 \quad 1]^T \times N\| = \|[-N_y \quad N_x \quad 0]^T\| \\ cos\theta = [0 \quad 0 \quad 1]^T . N = N_z \end{cases} \tag{2}$$

where $\|V\|$ represents the normalization operator of a vector V.

By applying the Rodrigue formula of a three-dimensional axis/angle rotation at (2), is obtained:

$$R_{3D} = I_3 cos\theta + I_3(1 - cos\theta)r.r^T + [r] \times sin\theta$$

$$R_{3D} = \begin{bmatrix} N_z + \eta N_y^2 & -\eta N_x N_y & N_x \\ -\eta N_x N_y & N_z + \eta N_x^2 & N_y \\ -N_x & -N_y & N_z \end{bmatrix} \text{avec} \quad \eta = \frac{1 - N_z}{N_x^2 + N_y^2} \tag{3}$$

This rotation matrix is calculated once per sample 211 and is applied to each vector to give the direction $\omega_i$ orientated according to the normal N.

Figures 4 and 5 show a method for determination of an intersection between on one hand a half-line 40 of direction $\omega_i$ having as origin the point P 16 and on the other hand the surface S, according to a particular embodiment of the invention.

As shown with respect to figure 4, the half-line 40 having as origin the point P 16 and for direction $\omega_i$ is discretized into a plurality of elementary samples, each sample corresponding to a segment of the half-line 40. Two samples are shown in figure 4, namely the segments [P-$S_{\omega i}$] and [$S_{\omega i}$-$S_{\omega i+1}$]. The half-line 40 is thus represented by several points, namely the points P 16, $S_{\omega i}$ 402 and $S_{\omega i+1}$ 404. The purpose of such a method is to determine the occlusion distance $\Delta_o$ 41 that corresponds to the distance separating the point P 16 from the intersection point 403 between the half-line 40 and the surface S. To determine if a sample, that is to say a segment of the half-line 40, has an intersection with the surface S, the first point $S_{\omega i}$ 402 of the half-line 470 corresponding to the first sample is projected onto the surface S according to the observation direction 111, as shown with respect to figure 5. The projection of the point $S_{\omega i}$ 402 onto the surface S is a point $S_{tj}$ 52, the distance $\delta_j$ separating the points $S_{\omega i}$ 402 and $S_{tj}$ 52 being recorded, for example in a recording table in a memory associated with the GPUs. To determine if the first segment [P-$S_{\omega i}$] of the half-line 40 has an intersection with the surface S, it suffices to compare the positions of points $S_{\omega i}$ 402 and $S_{tj}$ 52 with the position of the viewpoint 11. If the point $S_{\omega i}$ 402 is closer to the viewpoint 11 than the point $S_{tj}$ 52 the length of the observation direction 111, then the first segment [P-$S_{\omega i}$] of the half-line 40 has no intersection with the surface S. In the contrary case, that is to say if the point $S_{tj}$ 52 is closer to the viewpoint 11 than the point $S_{\omega i}$ 402, then the first segment [P-$S_{\omega i}$] of the half-line 40 has an intersection with the surface S. In the case where the first segment [P-$S_{\omega i}$] of the half-line 40 has an intersection with the surface S, the discretization process of the half-line is stopped as the intersection point of the half-line 40 with the surface S has been determined. In the contrary case shown with respect to figures 4 and 5, that is to say when the first segment [P-$S_{\omega i}$] of the half-line 40 does not have an intersection with the surface S, the discretization process of the half-line 40 continues and continues to the next segment [$S_{\omega i}$-$S_{\omega i+1}$] moving away from the point P 16 in the direction P $\to \omega_i$. The point $S_{\omega i+1}$ 404 is projected onto the surface S according to the observation direction 111, the result of the projection being a point $S_{\omega i+1}$ 404 and the distance $\delta_{j+1}$ separating the points $S_{\omega i+1}$ 404 and $S_{\omega i+1}$ 404 being recorded, for example in a recording table in a memory associated with the GPUs. To determine if the second segment [$S_{\omega i}$-$S_{\omega i+1}$] of the half-line 40 has an intersection with the surface S, the positions of points $S_{\omega i+1}$ 404 and $S_{tj+1}$ 53 are compared to the position of the viewpoint 11. The point $S_{tj+1}$ 53 being closer to the viewpoint 11 than the point $S_{\omega i+1}$ 404, this means that the second segment [$S_{\omega i}$-$S_{\omega i+1}$] has an intersection with the surface S. To precisely determine the position of the intersection point, the second segment

[$S_{\omega i}$-$S_{\omega i+1}$] is discretized in turn into a plurality of samples of small size and each point of the segment [$S_{\omega i}$-$S_{\omega i+1}$] representative of the discretization of the second segment is projected onto the surface S according to the direction 111, starting with the point closest to $S_{\omega i}$ 402. It is thus possible by reiterating discretization operations of segments of the half-line 40 to estimate with great precision the position of the intersection between a half-line 40 and the surface S. From coordinates of the point P 16 and the estimated intersection point, the occlusion distance $\Delta_0$ is determined. If the successive discretizations into smaller and smaller samples of the half-line 40 enable the intersection with the surface S to be estimated with precision, the necessary calculations can be costly. Advantageously, if no intersection with the surface S has been determined at the $n^{th}$ sample of the half-line, n being greater than a predetermined threshold value (for example equal to 15, 20, 25 or 50 samples), it is considered that the half-line 40 does not have an intersection with the surface S.

According to a variant, the occlusion distance $\Delta'_0$ between the point P and the intersection point between the half-line 40 and the surface S is determined by approximation from the points $S_{\omega i}$ 402 and $S_{\omega i+1}$ 404 surrounding the intersection point and from distances $\delta_j$ and $\delta_{j+1}$ previously estimated. According to this variant, it is assumed that the surface element of the surface S comprised between two points representative of the sampling of the half-line 40, for example the points $S_{\omega i}$ 402 et $S_{\omega i+1}$ 404, is globally plane. In this way, the occlusion distance $\Delta'_0$ is interpolated linearly:

$$\Delta'_0 = \|S_{\omega j}\| + \frac{\delta_j(\|S_{\omega j+1}\| - \|S_{\omega j}\|)}{\delta_j + \delta_{j+1}} \tag{4}$$

To determine an occlusion factor at the point P 16 comprised between 0 and 1, the square root of the occlusion distance $\Delta'_0$ is added to the contribution of the current occlusion at the point P, which is finally adapted to the number of samples.

It should be noted that a value of the occlusion factor A(P) close to 0 signifies that the occlusion at the point P is high and that conversely a value of the occlusion factor A(P° close to 1 signifies that the occlusion at the point P is low. Such an occlusion factor advantageously enables the contribution of each half-line having an intersection with the surface S to be weighted in the calculation of the occlusion at the point P. As described with respect to figures 2 and 3, a surface element of a half-sphere formed from a plurality of half-lines having as origin the point P is associated with each half-line forming the half-sphere. To determine the occlusion at the point P, the ratio between on one hand the sum of surface elements corresponding to the half-lines having an intersection with the surface S and on the other hand the total surface of the half-sphere is carried out, the ratio of surface thus obtained being representative of the occlusion at the point P. The contribution of each half-line 40 being an intersection with the surface S in the global occlusion at the point P depends on the distance separating the point P from the intersection. In fact, the more the occlusion distance is increased the less is the contribution of this intersection in the global occlusion at the point P. That is to say that the more the occlusion factor associated with a half-line 40 is close to 1, the less the contribution of the half-line considered in the calculation of global occlusion at the point P is significant. It is thus advantageous to weight each surface element associated with the half-lines having an intersection with the surface S by the occlusion factor before calculating the sum of surface elements associated with half-lines having an intersection with the surface S. The global occlusion at the point P thus corresponds to the ratio of the sum of surface elements, weighted with associated factors A(P), associated with the half-lines having an intersection with the surface S over the total surface of the half-sphere.

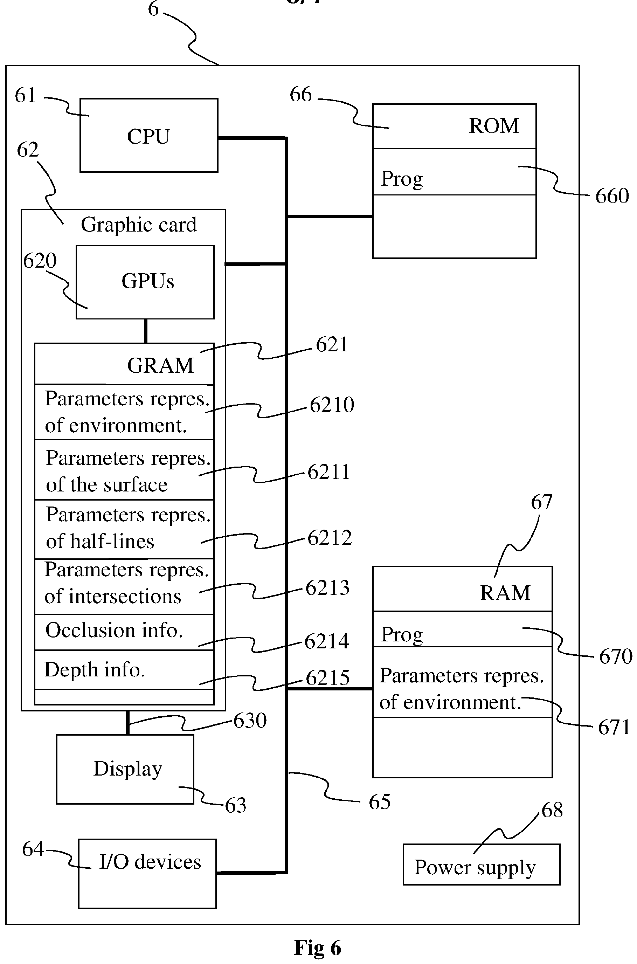

Figure 6 diagrammatically shows a hardware embodiment of a device 6 adapted for the estimation of the occlusion at a point of a virtual environment 1 and of the creation of display signals of one or several images. The device 6 corresponding for example to a personal computer PC, a laptop or a games console.

The device 6 comprises the following elements, connected to each other by a bus 65 of addresses and data that also transports a clock signal:

- a microprocessor 61 (or CPU),
- a graphics card 62 comprising:

  • several Graphicole Processor Units (or GPUs) 620,
  • a Graphical Random Access Memory (GRAM) 621,

- a non-volatile memory of ROM (Read Only Memory) type 66,
- a Random Access Memory or RAM 67,
- one or several I/O (Input/Output) devices 64 such as for example a keyboard, a mouse, a webcam, and
- a power source 68.

The device 6 also comprises a display device 63 of display screen type directly connected to the graphics card 62 to display notably the displaying of synthesized images calculated and composed in the graphics card, for example live. The use of a dedicated bus to connect the display device 63 to the graphics card 62 offers the advantage of having much greater data transmission bitrates and thus reducing the latency time for the displaying of images composed by the graphics card. According to a variant, a display device is external to the device 6 and is connected to the device 6 by a cable transmitting the display signals. The device 6, for example the graphics card 62, comprises a means for transmission or connection (not shown in figure 4) adapted to transmit a display signal to an external display means such as for example an LCD or plasma screen or a video-projector.

It is noted that the word "register" used in the description of memories 62, 66 and 67 designates in each of the memories mentioned, both a memory zone of low capacity (some binary data) as well as a memory zone of large capacity (enabling a whole program to be stored or all or part of the data representative of data calculated or to be displayed).

When switched-on, the microprocessor 61 loads and executes the instructions of the program contained in the RAM 67.

The random access memory 67 notably comprises:

- in a register 630, the operating program of the microprocessor 61 responsible for switching on the device 6,
- parameters 671 representative of the virtual environment 1 (for example modelling parameters of the virtual environment 1, lighting parameters of the virtual environment 1).

The algorithms implementing the steps of the method specific to the invention and described hereafter are stored in the memory GRAM 67 of the graphics card 62 associated with the device 6 implementing these steps. When switched on and once the parameters 670 representative of the environment are loaded into the RAM 67, the graphic processors 620 of the graphics card 62 load these parameters into the GRAM 621 and execute the instructions of these algorithms in the form of microprograms of "shader" type using HLSL (High Level Shader Language) language or GLSL (OpenGL Shading Language) for example.

The random access memory GRAM 621 notably comprises:

- in a register 6210, the parameters representative of the virtual environment 1,
- parameters 6211 representative of the surface S of points of the virtual environment 1 visible from a viewpoint 11 (for example the coordinates of points in the world space),
- parameters 6212 representative of half-lines for which are determined the intersection with the surface S (for example the origin, the direction, dicretization parameters),
- information 6213 representative of intersections between the half-lines and the surface S (for example the coordinates of intersections, the occlusion distances $\Delta_0$, the distances $\delta_j$), and
- one or several items of occlusion information 6214 representative of the occlusion at one or several visible points of the virtual environment 1,
- items of depth information 6215 representative of distances between the viewpoint 11 and the points of the virtual environment 1 visible from the viewpoint 11 (for example values representative of distances separating the viewpoint from visible points).

According to a variant, a part of the RAM 67 is assigned by the CPU 61 for storage of the values 6211 to 6214 and the parameters 6215 if the memory storage space available in GRAM 621 is insufficient. This variant however causes greater latency time in the composition of an image comprising a representation of the environment 1 composed from microprograms contained in the GPUs as the data must be transmitted from the graphics card to the random access memory 67 passing by the bus 65 for which the transmission capacities are generally inferior to those available in the graphics card for transmission of data from the GPUs to the GRAM and vice-versa.

According to another variant, the power supply 68 is external to the device 4.

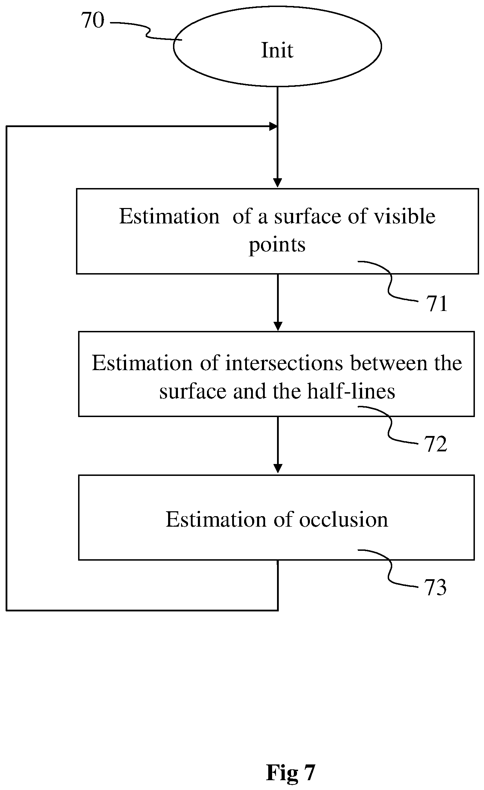

Figure 7 shows a method for estimation of the occlusion in a point P of a virtual environment implemented in a device 6, according to a non-restrictive particularly advantageous embodiment of the invention.

During an initialisation step 70, the different parameters of the device 6 are updated. In particular, the parameters representative of the virtual environment 1 are initialised in any way.

Then, during a step 71, a surface S grouping all or some of the points of the virtual environment 1 visible from the viewpoint 11 is estimated, this surface comprising the point P in which the occlusion is estimated. The surface S is advantageously estimated in the world space of the virtual environment 1. According to a variant, the surface S is determined in the space of a depth map representative of distances separating the viewpoint 11 from all or some of the points of the virtual environment visible from the viewpoint 11.

Then, during a step 72, the intersections between on one hand each half-line of a plurality of half-lines having as origin the point P and the surface S on the other hand are estimated. To do this, each half-line is discretized in a way to form segments of lines of variable size, the size of each segment being configured by the user. The bigger the size of the segments, the more the calculations for the estimation of the intersection will be rapid to the detriment of the precision of the estimation of the intersection. Conversely, the smaller the size of the segments, the more the estimation of the intersection will be precise and the more the calculations required for the estimation of the intersection will be costly. Advantageously the intersections are estimated in the world space of the virtual environment 1.

According to a variant, the intersections are estimated in the space of the depth map.

According to another variant, the plurality of half-lines for which are estimated the intersections with the surface S form a half-sphere 20 centred on the point P, this half-sphere rising mainly above the surface element associated with the point P.

According to another variant, the half-sphere 30 centred on P and formed of half-lines for which the intersection with the surface S is estimated is tangent to the surface element associated with the point P.

According to a particularly advantageous variant, the direction of half-lines forming a half-sphere centred on P depends on the location of the point P, that is to say depends of the coordinates of the point P, whether these coordinates are represented in the world space or in the space of the depth map. According to this variant, a plurality of half-lines is defined for a first point P of the surface S, the intersection of each of these half-lines with the surface S being determined. For a second point P neighbouring the first point, the half-lines defined are advantageously in a way to have different directions of half-lines associated with the first point P. The same reasoning is applied for each of the points of the surface S neighbouring the point P. Thus, when the neighbouring area of the first point P is considered, a great number of half-lines having different directions is obtained, Which advantageously enables the noise to be reduced which can be generated during the occlusion estimation at the point P with a restricted number of half-lines if all the half-lines associated with the first point P and with the points neighbouring the point P have the same directions.

According to a last variant, the half-lines 40 are discretized using the ray marching method to determine the intersection of each of them with the surface S.

Finally, during a step 73, the occlusion at the point P is estimated from information representative of intersections of half-lines having as origin the point P and the surface S. The occlusion at the point P corresponds advantageously with the ratio of the number of half-lines for which an intersection with the surface S has been found to the number of half-lines for which an intersection with the surface S were sought. According to a variant, the half-lines for which an intersection with the surface S were sought form a sphere or advantageously a half-sphere, a surface element of the sphere or the half-sphere being associated with each half-line. According to this variant, the occlusion at the point P corresponds to the ratio between the sum of surface elements associated with the half-lines having an intersection with the surface S over the total surface of the sphere or the half-sphere respectively. According to another variant, the numerator of the ratio representative of the occlusion at the point P is weighted by each of the occlusion factors associated respectively with each half-line having an intersection with the surface S in a way to take into account the distance between the point P and the intersection with the surface S for the half-lines having an intersection, the occlusion associated with a half-line being greater as the distance to the intersection is short.

According to another variant, the occlusion information at the point P is stored in an occlusion map. In the case where the ambient occlusion of the virtual environment 1 is estimated, the occlusion in each of the points of the virtual environment 1 visible from the viewpoint 11 is estimated by reiterating steps 72 and 73 for each of the visible points, the occlusion information of each of the visible points being stored in the occlusion map. Likewise, when the viewpoint varies, steps 71 to 73 are reiterated to estimate the occlusion in one or several visible points from this new viewpoint.

Naturally, the invention is not limited to the embodiments previously described.

In particular, the invention is not limited to a method for estimation of the occlusion at a point P of the virtual environment but also extends to any device implementing this method and notably any devices comprising at least one GPU. The implementation of calculations necessary to the estimation of the occlusion at the point P is not limited either to an implementation in shader type microprograms but also extends to an implementation in any program type, for example programs that can be executed by a CPU type microprocessor.

The use of the invention is not limited to a live utilisation but also extends to any other utilisation, for example for processing known as postproduction processing in a recording studio for the display of synthesis images for example. The implementation of the invention in postproduction offers the advantage of providing an excellent visual display in terms of realism notably while reducing the required calculation time.

The invention also relates to a method for composition of a video image, in two dimensions or in three dimensions, for which the ambient occlusion according to one or several observation directions is calculated and the information representative of the ambient occlusion that results is used for the displaying of pixels of the image, each pixel corresponding to an observation direction. The ambient occlusion calculated for displaying by each of the pixels of the image is re-calculated to adapt to the different viewpoints of the spectator.

The invention also relates to a method for estimation of the quantity of light received at a point P taking into account the reflections of the light on objects of the virtual environment 1. The quantity of light reflected depends on the occlusion at the point P considered and reflectance properties associated with the elements of the surface associated with the area neighbouring the point P considered.

The present invention can be used in video game applications for example, whether via programs that can be executed in a PC or portable type computer or in specialised game consoles producing and displaying images live. The device 6 described with respect to figure 6 is advantageously equipped with interaction means such as a keyboard and/or joystick, other modes for introduction of commands such as for example vocal recognition being also possible.

**Claims**

1. Computer-implemented method for estimation of the occlusion at a plurality of points P (16) of a virtual environment (1), each point of the plurality of points P (16) belonging to a surface (S) grouping at least some of the points of the virtual environment (1) visible from a viewpoint (11), the method comprising the steps of, for each point of the plurality of points:

   - sampling a base of a half-sphere centred on the point (P) and orthogonal to a viewpoint direction into a plurality of base samples;
   - rotating said half-sphere by rotating said plurality of base samples of a determined angle of rotation into a set of samples, wherein the angle of rotation varies from one point P to another;
   - forming a plurality of half-lines, each half-line being formed by projecting a sample (211) of said set of samples onto the rotated half-sphere according to an orthogonal axis (Z) at a basis of said rotated half-sphere, said half line having as origin said point P (16) and as end said projection of the sample onto said rotated half-sphere,
   - estimating (72) information (6213) representative of intersections (403) between said surface (S) and said plurality of half-lines, said intersections (403) being estimated by discretization of each half-line (40) of said plurality of half-lines,
   - associating contributions with the half-lines of said plurality of half-lines having an intersection with said surface (S), each contribution being a function of the occlusion distance ($\Delta'_{0j}$) separating said point P (16) from said intersection (403), and the value of the contribution associated with a half-line of said plurality being inversely proportional to the distance separating said point P from the intersection between said half-line and said surface (S), and
   - estimating (73) occlusion at said point P (16) from said information representative of intersections (403) estimated and said contributions, the occlusion at said point P (16) corresponding to the ratio of the number of half-lines having an intersection with said surface (S) to the total number of the plurality of half-lines, the numerator of said ratio representative of a sum of the intersections between said half-lines and said surface, each of the summed intersections being weighted with the contribution associated with the corresponding half-line; and
   - generating an image of the virtual environment using the estimated occlusion.

2. Method according to claim 1, **characterized in that** it comprises in addition a step of estimation of distances separating said viewpoint (11) from visible points of the virtual environment (1), said estimated distances being represented in a depth map (110), the estimation of said information representative of intersections being carried out in the space of the depth map.

3. Method according to claim 1 or 2, **characterized in that** said half-sphere rises mainly over a surface element (210) of said surface (S) associated with the point P (16) and the base (31) of said half-sphere is tangent to said surface element (210) associated with the point P (16).

4. Method according to one of the preceding claims, **characterized in that** it comprises a step of storage of an item of information representative of the occlusion at the point P (16) in an occlusion map.

5. Method according to one of the preceding claims, **characterized in that** the direction ($\omega_i$) of half-lines (40) depends on the location of the point P (16).

6. Method according to one of the preceding claims, **characterized in that** said information representative of intersections (403) is estimated using the ray marching method.

7. Device adapted for the estimation of the occlusion at a plurality of points P (16) of a virtual environment (1), each point of the plurality of points P (16) belonging to a surface (S) grouping at least some of the points of the virtual environment (1) visible from a viewpoint (11), said device being configured to, for each point of the plurality of points:

   - sample a base of a half-sphere centred on the point (P) and orthogonal to a viewpoint direction into a plurality of base samples;
   - rotate said half-sphere by rotating said plurality of base samples of a determined angle of rotation into a set of samples, wherein the angle of rotation varies from one point P to another;
   - form a plurality of half-lines, each half-line being formed by projecting a sample (211) of said set of samples onto the rotated half-sphere according to an orthogonal axis (Z) at a basis of said rotated half-sphere, said half line having as origin said point P (16) and as end said projection of the sample onto said rotated half-sphere,

- estimate (620) information (6213) representative of intersections (403) between said surface (S) and said plurality of half-lines, said intersections (403) being estimated by discretization of each half-line (40) of said plurality of half-lines, and

- associate contributions with the half-lines of said plurality of half-lines having an intersection with said surface (S), each contribution being a function of the occlusion distance ($\Delta_{0'}$) separating said point P (16) from said intersection (403), and the value of the contribution associated with a half-line of said plurality being inversely proportional to the distance separating said point P from the intersection between said half-line and said surface (S), and

- estimate (620) occlusion at said point P (16) from said information representative of intersections (403) estimated and said contributions, the occlusion at said point P (16) corresponding to the ratio of the number of half-lines having an intersection with said surface (S) to the total number of the plurality of half-lines, the numerator of said ratio representative of a sum of the intersections between said half-lines and said surface, each of the summed intersections being weighted with the contribution associated with the corresponding half-line; and

- generating an image of the virtual environment using the estimated occlusion.

**Patentansprüche**

1. Computerimplementiertes Verfahren zum Schätzen der Okklusion an einer Vielzahl von Punkten P (16) einer virtuellen Umgebung (1), wobei jeder Punkt der mehreren Punkte P (16) zu einer Oberfläche (S) gehört, die zumindest einige der Punkte der virtuellen Umgebung (1) gruppiert, die von einem Standpunkt (11) aus sichtbar sind, wobei das Verfahren die folgenden Schritte für jeden Punkt der mehreren Punkte umfasst:

   - Beproben einer Basis einer Halbkugel, die auf den Punkt (P) zentriert und orthogonal zu einer Blickrichtung ist, in mehrere Basisproben;
   - Drehen der Halbkugel durch Drehen der mehreren Basisproben mit einem bestimmten Drehwinkel in einen Satz von Proben, wobei der Drehwinkel von einem Punkt P zu einem anderen variiert;
   - Bilden von mehreren Halblinien, wobei jede Halblinie durch Projektion einer Probe (211) des Satzes von Proben auf die gedrehte Halbkugel gemäß einer orthogonalen Achse (Z) auf einer Basis der gedrehten Halbkugel gebildet wird, wobei die Halblinie als Ursprung den Punkt P (16) und als Ende die Projektion der Probe auf die gedrehte Halbkugel hat,
   - Schätzen (72) von Informationen (6213), die für Schnittpunkte (403) zwischen der Oberfläche (S) und den mehreren Halblinien repräsentativ sind, wobei die Schnittpunkte (403) durch Diskretisieren jeder Halblinie (40) der mehreren Halblinien geschätzt werden,
   - Zuordnen von Beiträgen zu den Halblinien der mehreren Halblinien, die einen Schnittpunkt mit der Oberfläche (S) aufweisen, wobei jeder Beitrag eine Funktion des Okklusionsabstands ($\Delta_{oj}$) ist, der den Punkt P (16) von dem Schnittpunkt (403) trennt, und der Wert des Beitrags, der einer Halblinie der mehreren Halblinien zugeordnet ist, umgekehrt proportional zu dem Abstand ist, der den Punkt P von dem Schnittpunkt zwischen der Halblinie und der Oberfläche (S) trennt, und
   - Schätzen (73) der Okklusion an dem Punkt P (16) anhand der Informationen, die für die geschätzten Schnittpunkte (403) und die Beiträge repräsentativ sind, wobei die Okklusion an dem Punkt P (16) dem Verhältnis der Anzahl der Halblinien, die einen Schnittpunkt mit der Oberfläche (S) haben, zu der Gesamtzahl der mehreren Halblinien entspricht, wobei der Zähler des Verhältnisses eine Summe der Schnittpunkte zwischen den Halblinien und der Oberfläche darstellt, wobei jeder der summierten Schnittpunkte mit dem Beitrag gewichtet wird, welcher der entsprechenden Halblinie zugeordnet ist; und
   - Generieren eines Bildes der virtuellen Umgebung anhand der geschätzten Okklusion.

2. Verfahren nach Anspruch 1, **dadurch gekennzeichnet, dass** es zusätzlich einen Schritt des Schätzens von Entfernungen umfasst, die den Standpunkt (11) von den sichtbaren Punkten der virtuellen Umgebung (1) trennen, wobei die geschätzten Entfernungen in einer Tiefenkarte (110) dargestellt werden, wobei das Schätzen der Informationen, die für die Schnittpunkte repräsentativ sind, im Raum der Tiefenkarte durchgeführt wird.

3. Verfahren nach Anspruch 1 oder 2, **dadurch gekennzeichnet, dass** sich die Halbkugel hauptsächlich über ein Oberflächenelement (210) der dem Punkt P (16) zugeordneten Oberfläche (S) erhebt und die Basis (31) der Halbkugel tangential zu dem Oberflächenelement (210) ist, das dem Punkt P (16) zugeordnet ist.

4. Verfahren nach einem der vorhergehenden Ansprüche, **dadurch gekennzeichnet, dass** es einen Schritt des Speicherns einer für die Okklusion am Punkt P (16) in einer Okklusionskarte repräsentativen Information umfasst.

**5.** Verfahren nach einem der vorhergehenden Ansprüche, **dadurch gekennzeichnet, dass** die Richtung ($\omega_i$) der Halblinien (40) von der Lage des Punktes P (16) abhängt.

**6.** Verfahren nach einem der vorhergehenden Ansprüche, **dadurch gekennzeichnet, dass** die Informationen, welche für die Schnittpunkte (403) repräsentativ sind, unter Verwenden des Ray-Marching-Verfahrens geschätzt werden.

**7.** Vorrichtung, die zum Schätzen der Okklusion an mehreren Punkten P (16) einer virtuellen Umgebung (1) angepasst ist, wobei jeder Punkt der mehreren Punkte P (16) zu einer Oberfläche (S) gehört, die zumindest einige der Punkte der virtuellen Umgebung (1) gruppiert, die von einem Standpunkt (11) aus sichtbar sind, wobei die Vorrichtung für jeden Punkt der mehreren Punkte für Folgendes konfiguriert ist:

- Beproben einer Basis einer Halbkugel, die auf den Punkt (P) zentriert und orthogonal zu einer Blickrichtung ist, in mehreren Basisproben;
- Drehen der Halbkugel durch Drehen der mehreren Basisproben mit einem bestimmten Drehwinkel in einen Satz von Proben, wobei der Drehwinkel von einem Punkt P zu einem anderen variiert;
- Bilden von mehreren Halblinien, wobei jede Halblinie durch Projektion einer Probe (211) des Satzes von Proben auf die gedrehte Halbkugel gemäß einer orthogonalen Achse (Z) auf einer Basis der gedrehten Halbkugel gebildet wird, wobei die Halblinie als Ursprung den Punkt P (16) und als Ende die Projektion der Probe auf die gedrehte Halbkugel hat,
- Schätzen (620) von Informationen (6213), die für Schnittpunkte (403) zwischen der Oberfläche (S) und den mehreren Halblinien repräsentativ sind, wobei die Schnittpunkte (403) durch Diskretisieren jeder Halblinie (40) der mehreren Halblinien geschätzt werden, und
- Zuordnen von Beiträgen zu den Halblinien der mehreren Halblinien, die einen Schnittpunkt mit der Oberfläche (S) aufweisen, wobei jeder Beitrag eine Funktion des Okklusionsabstands ($\Delta_o'$) ist, der den Punkt P (16) von dem Schnittpunkt (403) trennt, und der Wert des Beitrags, der einer Halblinie der mehreren zugeordneten Halblinien zugeordnet ist, umgekehrt proportional zu dem Abstand ist, der den Punkt P von dem Schnittpunkt zwischen der Halblinie und der Oberfläche (S) trennt, und
- Schätzen (620) der Okklusion an dem Punkt P (16) anhand der Informationen, die für die geschätzten Schnittpunkte (403) und die Beiträge repräsentativ sind, wobei die Okklusion an dem Punkt P (16) dem Verhältnis der Anzahl der Halblinien, die einen Schnittpunkt mit der Oberfläche (S) aufweisen, zu der Gesamtzahl der mehreren Halblinien entspricht, wobei der Zähler des Verhältnisses eine Summe der Schnittpunkte zwischen den Halblinien und der Oberfläche darstellt, wobei jeder der summierten Schnittpunkte mit dem Beitrag gewichtet wird, welcher der entsprechenden Halblinie zugeordnet ist; und
- Generieren eines Bildes der virtuellen Umgebung anhand der geschätzten Okklusion.

**Revendications**

**1.** Procédé implémenté par ordinateur pour l'estimation de l'occlusion au niveau d'une pluralité de points P (16) d'un environnement virtuel (1), chaque point de la pluralité de points P (16) appartenant à une surface (S) regroupant au moins certains des points de l'environnement virtuel (1) visibles depuis un point de vue (11), le procédé comprenant les étapes, pour chacun de la pluralité de points, de :

- échantillonnage d'une base d'une demi-sphère centrée sur le point (P) et orthogonale à une direction de point de vue en une pluralité d'échantillons de base ;
- rotation de ladite demi-sphère en faisant tourner ladite pluralité d'échantillons de base d'un angle de rotation déterminé dans un ensemble d'échantillons, dans lequel l'angle de rotation varie d'un point P à un autre ;
- formation d'une pluralité de demi-lignes, chaque demi-ligne étant formée en projetant un échantillon (211) dudit ensemble d'échantillons sur la demi-sphère mise en rotation selon un axe orthogonal (Z) au niveau d'une base de ladite demi-sphère mise en rotation, ladite demi-ligne ayant comme origine ledit point P (16) et comme fin ladite projection de l'échantillon sur ladite demi-sphère mise en rotation,
- estimation (72) d'informations (6213) représentatives d'intersections (403) entre ladite surface (S) et ladite pluralité de demi-lignes, lesdites intersections (403) étant estimées par discrétisation de chaque demi-ligne (40) de ladite pluralité de demi-lignes,
- association de contributions aux demi-lignes de ladite pluralité de demi-lignes ayant une intersection avec ladite surface (S), chaque contribution étant une fonction de la distance d'occlusion ($\Delta'_{0j}$) séparant ledit point P (16) de ladite intersection (403), et la valeur de la contribution associée à une demi-ligne de ladite pluralité étant inversement proportionnelle à la distance séparant ledit point P de l'intersection entre ladite demi-ligne et ladite surface (S), et

- estimation (73) d'une occlusion au niveau dudit point P (16) à partir desdites informations représentatives d'intersections (403) estimées et desdites contributions, l'occlusion au niveau dudit point P (16) correspondant au rapport entre le nombre de demi-lignes ayant une intersection avec ladite surface (S) et le nombre total de la pluralité de demi-lignes, le numérateur dudit rapport étant représentatif d'une somme des intersections entre lesdites demi-lignes et ladite surface, chacune des intersections sommées étant pondérée avec la contribution associée à la demi-ligne correspondante ; et
- génération d'une image de l'environnement virtuel à l'aide de l'occlusion estimée.

2. Procédé selon la revendication 1, **caractérisé en ce qu'**il comprend en outre une étape d'estimation de distances séparant ledit point de vue (11) de points visibles de l'environnement virtuel (1), lesdites distances estimées étant représentées dans une carte de profondeur (110), l'estimation desdites informations représentatives d'intersections étant réalisée dans l'espace de la carte de profondeur.

3. Procédé selon la revendication 1 ou 2, **caractérisé en ce que** ladite demi-sphère s'élève principalement au-dessus d'un élément de surface (210) de ladite surface (S) associé au point P (16) et la base (31) de ladite demi-sphère est tangente audit élément de surface (210) associé au point P (16).

4. Procédé selon l'une des revendications précédentes, **caractérisé en ce qu'**il comprend une étape de stockage d'un élément d'informations représentatif de l'occlusion au niveau du point P (16) dans une carte d'occlusion.

5. Procédé selon l'une des revendications précédentes, **caractérisé en ce que** la direction ($\omega_i$) de demi-lignes (40) dépend de l'emplacement du point P (16) .

6. Procédé selon l'une des revendications précédentes, **caractérisé en ce que** lesdites informations représentatives d'intersections (403) sont estimées à l'aide du procédé de lancer de rayon progressif.

7. Dispositif adapté pour l'estimation de l'occlusion au niveau d'une pluralité de points P (16) d'un environnement virtuel (1), chaque point de la pluralité de points P (16) appartenant à une surface (S) regroupant au moins certains des points de l'environnement virtuel (1) visibles depuis un point de vue (11), ledit dispositif étant configuré, pour chaque point de la pluralité de points, pour :

- échantillonner une base d'une demi-sphère centrée sur le point (P) et orthogonale à une direction de point de vue en une pluralité d'échantillons de base ;
- mettre en rotation ladite demi-sphère en mettant en rotation ladite pluralité d'échantillons de base d'un angle de rotation déterminé dans un ensemble d'échantillons, dans lequel l'angle de rotation varie d'un point P à un autre ;
- former une pluralité de demi-lignes, chaque demi-ligne étant formée en projetant un échantillon (211) dudit ensemble d'échantillons sur la demi-sphère mise en rotation selon un axe orthogonal (Z) au niveau d'une base de ladite demi-sphère mise en rotation, ladite demi-ligne ayant comme origine ledit point P (16) et comme fin ladite projection de l'échantillon sur ladite demi-sphère mise en rotation,
- estimer (620) des informations (6213) représentatives d'intersections (403) entre ladite surface (S) et ladite pluralité de demi-lignes, lesdites intersections (403) étant estimées par discrétisation de chaque demi-ligne (40) de ladite pluralité de demi-lignes, et
- associer des contributions aux demi-lignes de ladite pluralité de demi-lignes ayant une intersection avec ladite surface (S), chaque contribution étant une fonction de la distance d'occlusion ($\Delta_{0'}$) séparant ledit point P (16) de ladite intersection (403), et la valeur de la contribution associée à une demi-ligne de ladite pluralité étant inversement proportionnelle à la distance séparant ledit point P de l'intersection entre ladite demi-ligne et ladite surface (S), et
- estimer (620) une occlusion au niveau dudit point P (16) à partir desdites informations représentatives d'intersections (403) estimées et desdites contributions, l'occlusion au niveau dudit point P (16) correspondant au rapport entre le nombre de demi-lignes ayant une intersection avec ladite surface (S) et le nombre total de la pluralité de demi-lignes, le numérateur dudit rapport étant représentatif d'une somme des intersections entre lesdites demi-lignes et ladite surface, chacune des intersections sommées étant pondérée avec la contribution associée à la demi-ligne correspondante ; et
- générer une image de l'environnement virtuel à l'aide de l'occlusion estimée.

**Fig 1A**

**Fig 1B**

**Fig 2**

**Fig 3**

**Fig 4**

**Fig 5**

**Fig 6**

70 —

Init

Estimation of a surface of visible points

71

Estimation of intersections between the surface and the half-lines

72

Estimation of occlusion

73

**Fig 7**

**EP 2 444 940 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- *Blender Dokumentation: Ambient Occlusion,* 05 January 2009, http://de.wikibooks.orgs/wiki/Blender Dokumentation: Ambient Occlusio n

- Hardware accelerated ambient occlusion techniques on GPUs. Proceedings of the 2007 symposium on interactive 3D graphics and games. 30 April 2007